# EUROPÄISCHE PATENTSCHRIFT

(11) **EP 3 460 533 B1**
(45) Veröffentlichungstag und Bekanntmachung des Hinweises auf die Patenterteilung: **10.06.2020**
(21) Anmeldenummer: 18191585.1
(22) Anmeldetag: 30.08.2018
(51) Int. Cl.: G01V 8/14, B07C 5/12, B65B 57/02, G01N 21/90

(54) **OPTOELEKTRONISCHER SENSOR UND VERFAHREN ZUR ERFASSUNG VON TRANSPARENTEN OBJEKTEN**
OPTOELECTRONIC SENSOR AND METHOD FOR DETECTING TRANSPARENT OBJECTS
CAPTEUR OPTOÉLECTRONIQUE ET PROCÉDÉ DE DÉTECTION D'OBJETS TRANSPARENTS

(30) Priorität: 21.09.2017 DE 102017121891
(43) Veröffentlichungstag der Anmeldung: 27.03.2019
(73) Patentinhaber: SICK AG, 79183 Waldkirch (DE)
(72) Erfinder: ERLEWEIN, Patrick, 79106 Freiburg (DE)

(56) Entgegenhaltungen:
- EP-A1- 0 891 044
- EP-A2- 2 520 952
- DD-A1- 245 173
- DE-A1-102016 013 940
- US-A- 4 076 979

## Beschreibung

Die Erfindung betrifft einen optoelektronischer Sensor und ein Verfahren zur Erfassung von transparenten Objekten in einem Überwachungsbereich nach dem Oberbegriff von Anspruch 1 beziehungsweise 10.

Eine Lichtschranke stellt die Anwesenheit eines Objekts daran fest, ob der Lichtstrahl unterbrochen ist oder nicht, und gibt ein entsprechendes Schaltsignal aus. Lichtschranken sind als Einweglichtschranken bekannt, in denen der Lichtempfänger dem Lichtsender gegenüber angeordnet ist und der Lichtstrahl dazwischen einen Überwachungsbereich aufspannt. Weiterhin gibt es Reflexionslichtschranken, in denen Lichtsender und Lichtempfänger auf der gleichen Seite angeordnet sind und der Lichtstrahl mit Hilfe eines Reflektors, häufig eines Retroreflektors, zurückgeworfen wird und somit den Überwachungsbereich zweimal durchquert. Ähnlich wie eine Reflexionslichtschranke ist ein Lichttaster aufgebaut, wobei der Lichttaster nicht auf einen kooperativen Reflektor, sondern in den freien Raum gerichtet ist, und somit in Umkehrung des Lichtschrankenprinzips Sendelicht gerade dann empfängt, wenn ein Objekt in den Sendestrahl tritt. Für alle diese Sensortypen ist auch bekannt, mehrere Sensoren parallel zueinander anzuordnen und so ein Lichtgitter oder ein tastendes Lichtgitter zu bilden.

Der Sensor erkennt üblicherweise eine Strahlunterbrechung durch eine Schwellbewertung des Empfangssignals. Für ein robustes Schaltverhalten ist daher ein großer Signalabstand zwischen einem Strahlengang mit und ohne Objekt hilfreich. Bei der Erkennung von transparenten Objekten ist das aber gerade nicht gegeben, weil nur ein geringer Anteil des Lichts blockiert wird. Es gibt jedoch schon länger verschiedene Ansätze, durch Anpassung der Schwelle oder zusätzliche Schwelle auch transparente Objekte zu detektieren.

So ist aus DE 196 27 083 A1 eine Reflexionslichtschranke bekannt, die zwei Schwellen nutzt. Die erste Schwelle entspricht der üblichen Schwelle, bei deren Unterschreitung auf ein verdeckendes Objekt im Strahlengang geschlossen wird. Eine zusätzliche zweite Schwelle wird sogar oberhalb des Empfangspegels bei freiem Strahlengang gesetzt, und deren Überschreiten zeigt ein transparentes Objekt an. Dahinter steht der Gedanke, dass in der Praxis zahlreiche transparente Objekte, insbesondere Flaschen, durch ihre Formgebung wie eine Zylinderlinse wirken und das Licht der Reflexionslichtschranke fokussieren.

In einer Reflexionslichtschranke nach DE 198 04 317 A1 werden ebenfalls zwei Schwellen gesetzt, die aber beide unterhalb des Empfangspegels bei freiem Strahlengang liegen. Damit wird eine empfindliche Detektion für transparente Objekte und eine robuste Detektion sonstiger Objekte ermöglicht.

Die DE 100 16 892 B4 offenbart eine weitere Reflexionslichtschranke, die transparente und spiegelnde Objekte erkennen soll. Durch Integration der Empfangssignale soll eine besonders hohe Nachweisempfindlichkeit erreicht werden. Die verbesserte Detektion erfordert aber deutlichen Zusatzaufwand, denn es wird ein zweiter Sender zum Erzeugen von Sendelicht einer vorgegebenen Polarisierung eingesetzt. Der Gedanke, das Empfangssignal zu integrieren, ist auch der EP 1 843 175 B1 zu entnehmen, allerdings in völlig anderem Zusammenhang als der Erkennung transparenter Objekte, nämlich zum Synchronisieren von Sender und Empfänger einer Einweglichtschranke.

Während somit prinzipiell Lösungen verfügbar sind, um mit vergleichsweise einfachen Sensoren wie einer Lichtschranke oder einem Lichttaster transparente Objekte zu erfassen, ergeben sich ganz andere Herausforderungen, wenn das transparente Objekt kein einheitliches Transmissions- und Remissionsverhalten zeigt. Ein konkretes Beispiel sind Flaschen, die mit Etiketten beklebt sind. Solche Etiketten wiederum können in einer erheblichen Vielfalt durch Eigenschaften wie Teiltransparenz oder farbige Motive auftreten

Möchte man solche Etiketten erkennen oder zumindest ausblenden, so gibt es dafür keine zufriedenstellende Möglichkeit. Natürlich ist denkbar, ein Kamerasystem mit einer Bildauswertung einzusetzen. Eine derartige Sensorik bewegt sich aber in einer ganz anderen Komplexitäts- und Preiskategorie. Zudem ist die Montage und Ausrichtung von Kamera und Beleuchtung aufwändig, und die Bildauswertung muss auf das konkrete Etikett eingelernt werden. Je nach Objekt und Etikett kann es dabei auch zu Schwierigkeiten kommen.

Mit einfachen Lichttastern oder Lichtschranken lässt sich das Problem bisher nur lösen, indem mehrere Sensoren kombiniert werden. Beispielsweise werden zwei Reflexionslichtschranken mit unterschiedlichen Schwellen eingesetzt. Der ohnehin schon größere Aufwand durch den zusätzlichen Sensor an sich wird weiter durch die Montage und vor allem die gemeinsame Ausrichtung erhöht. Es besteht auch die Gefahr, dass sich beide Lichtschranken gerade im Falle zu geringer Abstände gegenseitig stören. Wenn sich das Etikett nicht ausreichend von dem Objekt unterscheidet, beispielsweise selbst transparent ist, gibt es nur geringe Signalunterschiede. Dann müssen die Schwellen in beiden Sensoren ähnlich eingestellt werden, und die Robustheit ist stark eingeschränkt.

Die DE 10 2016 013 940 A1 offenbart eine optische Erfassung von Flaschen auf einem Förderband mit Erkennung eines ersten und zweiten Füllstands. Dazu wird ein Lichtstrahl tastend auf einen Reflektor gerichtet, vor dem sich die Flaschen vorbeibewegen. Anhand zweier Schwellen wird unterschieden, ob sich keine Flasche, eine Flasche mit dem ersten Füllstand oder eine Flasche mit dem zweiten Füllstand im Strahlengang befindet. Zudem wird mittels Lichtlaufzeitverfahren der Abstand zu der Flasche gemessen, um anhand des Abstands auch eine stark reflektierende Flasche von dem Reflektor zu unterscheiden, was mit reinen Intensitätsschwellen nicht möglich wäre.

In der DD 245 173 A1 wird eine Kontrolleinrichtung für Etiketten offenbart. Dazu sind zwei gekreuzte Lichtschranken vorgesehen, wobei der Kreuzungswinkel abhängig von Etikettenbreite und Flaschendurchmesser gewählt ist. Ein induktiver Indikator erfasst den Kronkorken am Kreuzungspunkt und löst die Detektion aus. Wenn beide Lichtstrahlen die Flasche passieren und von der Lichtschranke detektiert werden, so wird die Flasche als unetikettiert behandelt, wobei sowohl die Gesamtzahl der Flaschen als auch die Anzahl der unetikettierten Flaschen gezählt wird.

Es ist daher Aufgabe der Erfindung, die Erfassung transparenter Objekte zu verbessern.

Diese Aufgabe wird durch einen optoelektronischer Sensor und ein Verfahren zur Erfassung von transparenten Objekten in einem Überwachungsbereich nach Anspruch 1 beziehungsweise 10 gelöst. Der Sensor sendet ein Lichtsignal, vorzugsweise als eng begrenztes Lichtbündel oder Lichtstrahl für einen eindimensionalen Überwachungsbereich, und erzeugt ein Empfangssignal aus dem empfangenen Lichtsignal. Das Empfangssignal wird zunächst wie einleitend erläutert beispielsweise mit einer wegen der Transparenz empfindlich gesetzten Schwelle oder mit mehreren Schwellen bewertet, um transparente Objekte im Strahlengang zu erkennen und ein entsprechendes Objektfeststellungssignal ein einem Ausgang bereitzustellen.

Die Erfindung geht von dem Grundgedanken aus, das Empfangssignal zusätzlich hinsichtlich eines Zusatzmerkmals auszuwerten. Das einleitend schon verwendete Beispiel für ein Zusatzmerkmal ist ein Etikett. Der Auswertungseinheit steht eine Referenzinformation über ein transparentes Objekt zur Verfügung. Das ermöglicht zu entscheiden, ob das transparente Objekt das Zusatzmerkmal aufweist oder nicht, und diese Zusatzmerkmalsinformation wird ebenfalls ausgegeben. Die Referenzinformation entspricht je nach Ausführungsform einem transparenten Objekt mit Zusatzmerkmal oder ohne Zusatzmerkmal, oder es steht sogar eine Referenzinformation sowohl für ein transparentes Objekt mit Zusatzmerkmal als auch ohne Zusatzmerkmal zur Verfügung. Denkbar ist auch, dass die transparenten Objekte eines von mehreren möglichen Zusatzmerkmalen tragen. Dann wird entschieden, ob überhaupt ein Zusatzmerkmal vorhanden ist, oder die Zusatzmerkmale werden außerdem noch unterschieden. Da die Referenzinformation in der Regel relativ einfach ist, lassen sich nicht beliebige Zusatzmerkmale zuverlässig unterscheiden, aber insbesondere für zwei oder wenige einander nicht zu ähnliche Zusatzmerkmale ist das in vielen Fällen noch möglich.

Die Erfindung hat den Vorteil, dass der Sensor nicht nur transparente Objekte detektiert, sondern außerdem noch ein Zusatzmerkmal an dem Objekt auswertet. Die zusätzliche Bewertung kann integriert in demselben Prozessschritt erfolgen. Der Sensor bleibt einfach und preisgünstig, denn die Hardwareanforderungen unterscheiden sich nicht von einem herkömmlichen Sensor, wie einer Lichtschranke oder einem Lichttaster, der lediglich eine intelligentere Auswertung besitzt. Dadurch bleibt auch die Montage sehr unkompliziert. Informationen aus der Anlage, in welcher der Sensor eingesetzt ist, sind zumindest nicht zwingend erforderlich, wodurch die Inbetriebnahme sich weiter vereinfacht.

Sensor und zu detektierende Objekte befinden sich vorzugsweise in Relativbewegung. Dementsprechend sind die Auswertungen an eine Relativbewegung angepasst. Der Lichtfleck, den das ausgesandte Lichtsignal auf dem Objekt erzeugt, wandert wegen der Relativbewegung einmal über das Objekt und scannt es sozusagen ab. Dabei entsteht ein zeitabhängiges Empfangssignal. In sehr vielen Anwendungsfällen wird eine Relativbewegung dadurch erzeugt, dass der Sensor stationär an einer Fördereinrichtung beziehungsweise einem Förderband montiert ist, auf dem die transparenten Objekte gefördert werden.

Die Auswertungseinheit ist bevorzugt dafür ausgebildet, das Empfangssignal für die Erkennung des Zusatzmerkmals auf einem transparenten Objekt nur in einem Zeitintervall zu bewerten, in dem das transparente Objekt erfasst ist. Durch eine solche zeitliche Beschränkung wird das ausgewertete Empfangssignal nur von dem Objekt bestimmt, und daher ist die Auswertung genauer.

Das Zeitintervall ist bevorzugt durch das Objektfeststellungssignal vorgegeben. Das Objektfeststellungssignal ist Ergebnis der Auswertung, ob ein transparentes Objekt erfasst ist oder nicht. Wird daher die Auswertung des Empfangssignals zur Erkennung des Zusatzmerkmals auf ein Zeitintervall des "Ein"-Zustands des Objektfeststellungssignals beschränkt, so ist ohne Aufwand die Bewertung auf die tatsächliche Erfassung des transparenten Objekts beschränkt. Alternativ könnte die Erfassung eines transparenten Objekts nachgestellt werden, also beispielsweise ein Über- oder Unterschreiten des Empfangssignals einer Schwelle die Grenzen des Zeitintervalls festlegen. Eine weitere Alternative ist ein zusätzlicher Triggersensor oder ein Triggersignal einer übergeordneten Steuerung etwa der Fördereinrichtung, auf der sich die Objekte bewegen. Beides erfordert aber zusätzlichen Aufwand.

Die Auswertungseinheit ist bevorzugt dafür ausgebildet, eine Änderung der Relativbewegung anhand einer Abweichung des Zeitintervalls von einer Erwartung zu erkennen. Das erwartete Zeitintervall, in dem ein Objekt von dem Sensor erfasst ist, lässt sich aus der Geschwindigkeit der Relativbewegung und der Ausdehnung der zu erfassenden Objekte in Förderrichtung bestimmen. Wenn die tatsächliche Geschwindigkeit abweicht, wird das über dem Zeitintervall aufgetragene Empfangssignal gestaucht oder gestreckt, was zu Fehlauswertungen führen kann. Insbesondere wird beim Integrieren des Empfangssignals über das Zeitintervall wie in einigen noch zu erläuternden Ausführungsformen das Ergebnis verfälscht, wenn die Relativbewegung nicht der Erwartung entspricht, also beispielsweise ein Förderband mit anderer Geschwindigkeit läuft. Der Sensor kann Abweichungen in der Geschwindigkeit oder ein Stoppen des Förderbandes während der Detektion selbst erkennen und beispielsweise der Anlage eine Warnung ausgeben. Denkbar wäre auch, eine Abtastrate des Empfangssignals an das tatsächliche Zeitintervall der Erfassung eines Objekts anzupassen, so dass zumindest das Empfangssignal eines nachfolgenden Objekts wieder mit einer erwarteten Anzahl von Abtastungen vorliegt.

Die Auswertungseinheit ist bevorzugt dafür ausgebildet, als Referenzinformation eine aus einem Empfangssignal eines Referenzobjekts gewonnene Information zu verwenden, wobei das Referenzobjekt ein zu detektierendes transparentes Objekt mit und/oder ohne Zusatzmerkmal ist. Das Empfangssignal des Referenzobjekts wird auch als Referenzsignal bezeichnet. Das Referenzsignal kann von dem transparenten Objekt als solches gewonnen werden, welches kein Zusatzmerkmal aufweist. Ebenso ist ein Referenzsignal von einem transparenten Objekt mit dem Zusatzmerkmal denkbar, oder eine Kombination von beidem. Wie schon erwähnt, kann der Sensor auch derart weitergebildet werden, dass mehrere Zusatzmerkmale unterschieden werden, wobei dann vorzugsweise Referenzsignale von jeweils dem transparenten Objekt mit einem der Zusatzmerkmale genutzt werden. Die Referenzsignale werden vorteilhafterweise in einem Einlernvorgang bei der Inbetriebnahme bestimmt. Es ist aber auch denkbar, Referenzinformationen vorab oder zentral durch Messung oder Modellierung zu gewinnen und dann zu parametrieren oder einzuspielen. Ein Spezialfall ist das Überspielen von Referenzinformationen von einem zu ersetzenden Sensor auf ein Austauschgerät.

Die Auswertungseinheit ist bevorzugt dafür ausgebildet, das Empfangssignal zu integrieren. Durch die Integration wird die zeitabhängige Information zusammengefasst, insbesondere während des Durchfahrens durch den Strahlengang in Relativbewegung. Die Integration erfolgt vorzugsweise über das Zeitintervall, in dem das Objekt erfasst ist. Es sind aber auch ein oder mehrere Teilabschnitte vorstellbar.

Die Auswertungseinheit ist bevorzugt dafür ausgebildet, als Referenzinformation eine aus einem integrierten Empfangssignal eines Referenzobjekts gewonnene Information zu verwenden, wobei das Referenzobjekt ein zu detektierendes transparentes Objekt mit und/oder ohne Zusatzmerkmal ist. Dadurch entsteht eine summarische Referenzinformation, mit deren Hilfe sehr einfach ausgewertet werden kann. Vorzugsweise ist der Vergleichswert ein aufintegriertes Empfangssignal eines gerade erfassten oder zu erfassenden Objekts, wobei die Integration vorzugsweise jeweils über den gleichen Zeitabschnitt erfolgt, d.h. das Zeitintervall, in dem sich das Objekt beziehungsweise Referenzobjekt im Strahlengang befindet, oder einen oder mehrere Teilabschnitte.

Die Auswertungseinheit ist bevorzugt dafür ausgebildet, als Referenzinformation einen Schwellenwert aus dem integrierten Empfangssignal des Referenzobjekts zu verwenden. Die durch Integration gewonnene summarische Referenzinformation ist also eine Schwelle, die eine sehr einfache Auswertung zum Auffinden der Zusatzmerkmalsinformation erlaubt. Die Schwelle kann eingelernt werden, indem ein Referenzobjekt durch den Strahlengang geführt und das dabei gemessene Referenzsignal integriert wird. Es ist aber auch möglich, die Schwelle beispielsweise durch Simulation anhand des zu erfassenden Zusatzmerkmals zu bestimmen und in den Sensor zu übertragen. Je nach Referenzsignal bietet die Schwelle unterschiedliche Auswertungsmöglichkeiten. Wenn das Referenzsignal beispielsweise einem transparenten Objekt ohne Zusatzmerkmal entspricht, dann bedeutet ein Unterschreiten der Schwelle, dass das erfasste transparente Objekt offensichtlich eine Abweichung aufweist, also irgendeine Art von Zusatzmerkmal trägt. Wenn die Anwendung sicherstellt, dass es nur ein mögliches Zusatzmerkmal gibt, genügt dies schon zur Erfassung der Zusatzmerkmalsinformation. Eine weitere Möglichkeit ist, eine Schwelle aus dem aufintegrierten Referenzsignal eines transparenten Objekts mit dem zu erfassenden Zusatzmerkmal zu bestimmen. Ist dann im Betrieb das integrierte Empfangssignal in einem Korridor um diese Schwelle, wird daraus gefolgert, dass das gerade erfasste Objekt das Zusatzmerkmal aufweist.

Die Auswertungseinheit ist bevorzugt dafür ausgebildet, das Objektfeststellungssignal und die Zusatzmerkmalsinformation an dem Ausgang auszugeben. Der erfindungsgemäße Sensor gibt zwei Informationen aus: das Objektfeststellungssignal, welches die Information trägt, ob ein transparentes Objekt erfasst ist, und die Zusatzmerkmalsinformation, die wiederum bedeuten kann, dass ein aktuell erfasstes oder das zuletzt erfasste transparente Objekt kein Zusatzmerkmal oder irgendein Zusatzmerkmal trägt, oder spezifischer dass es das richtige Zusatzmerkmal trägt. Der Sensor kann diese Informationen gemeinsam am selben Ausgang ausgeben, der üblicherweise als Schaltausgang für die Objektanwesenheit fungiert. Die Zusatzmerkmalsinformation kann mittels Modulation überlagert werden, etwa durch einen Puls oder eine Pulscodierung. Auch ein zeitversetztes Ausgeben beider Informationen, wie auf Anfrage oder im Zeitmultiplex, ist denkbar.

Der Sensor weist bevorzugt einen weiteren Ausgang zur Ausgabe der Zusatzmerkmalsinformation. In dieser Ausführungsform bleibt der Ausgang für das Objektfeststellungssignal wie bei einem herkömmlichen Sensor. Die Zusatzmerkmalsinformation wird an mindestens einem eigenen Ausgang beziehungsweise Pin bereitgestellt, wobei auch mehrere zusätzliche Ausgänge zum Bestätigen, dass das Zusatzmerkmal erkannt ist beziehungsweise eine Fehlermeldung für ein transparentes Objekt ohne Zusatzmerkmal vorstellbar sind. Werden sogar mehrere Zusatzmerkmale unterschieden, so sind je ein Ausgang pro Zusatzmerkmal oder beliebige Codierungen für das jeweils erkannte Zusatzmerkmal an einem Ausgang möglich. Schließlich ist auch denkbar, dass der Ausgang für das Objektsfeststellungssignal und/oder ein dedizierter Ausgang für die Zusatzmerkmalsinformation für ein Kommunikationsprotokoll wie IO-Link ausgebildet sind.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
Fig. 1 eine vereinfachte Blockdarstellung eines optoelektronischen Sensors;
Fig. 2 eine Darstellung einer Flasche mit Etikett als Beispiel eines zu erfassenden transparenten Objekts mit Zusatzmerkmal;
Fig. 3 eine beispielhafte Detektionsanwendung eines optoelektronischen Sensors mit dabei erzeugten Objektfeststellungssignalen sowie Signalen für eine Zusatzmerkmalsinformation;
Fig. 4 eine vergleichende Darstellung eines beispielhaften ersten Empfangssignals für ein transparentes Objekt ohne Zusatzmerkmal und eines zweiten Empfangssignals für ein transparentes Objekt mit Zusatzmerkmal sowie zugehörige integrierte Signale; und
Fig. 5 drei weitere Beispiele für Empfangssignale eines transparenten Objekts ohne Zusatzmerkmal und mit zwei verschiedenen Zusatzmerkmalen.

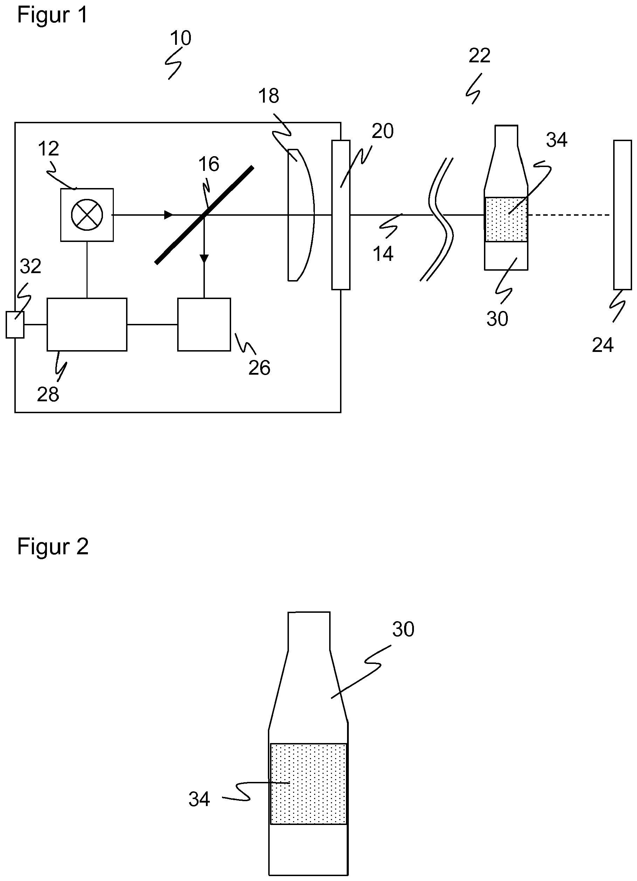

Figur 1 zeigt eine Blockdarstellung einer Ausführungsform eines erfindungsgemäßen optoelektronischen Sensors 10 als Reflexionslichtschranke. Die Erfindung wird am Beispiel einer Reflexionslichtschranke beschrieben, die wegen der Detektionsfähigkeit für transparente Objekte auch als Glaslichtschranke bezeichnet wird, ist aber nicht darauf beschränkt. Insbesondere sind auch andere vergleichsweise einfache, eindimensionale optoelektronische Sensoren wie Einweglichtschranken oder Lichttaster ohne kooperativen Reflektor denkbar. Die unten diskutierten Signalverläufe verändern sich mit dem Sensorprinzip, nicht aber die grundsätzlichen erfindungsgemäßen Auswertungsmöglichkeiten, wobei bei transparenten Objekten Reflexionslichtschranken Vorteile zeigen, zum Beispiel gegenüber einem reinen Lichttaster einen vergleichsweise hohe Nutzpegel.

Der Sensor 10 weist einen Lichtsender 12 mit einer Lichtquelle auf, beispielsweise einem Laser oder einer LED, und ist in der Lage, einen Sendelichtstrahl 14 zu erzeugen, der einen Teilerspiegel 16 passiert und über eine Optik 18 gebündelt wird. Der Sendelichtstrahl 14 tritt durch eine Frontscheibe 20 aus, passiert einen Überwachungsbereich 22, trifft dann auf einen jenseits angeordneten Reflektor 24, insbesondere einen Retroreflektor, und kehrt zu dem Sensor 10 zurück. Nach erneuter Strahlformung in der Optik 18 wird der zurückkehrende Sendelichtstrahl 14 an dem Teilerspiegel 16 reflektiert und in einem Lichtempfänger 26 registriert, beispielsweise einer Photodiode oder einem pixelaufgelösten Matrixbildsensor.

Der einfallende Sendelichtstrahl 14 wird in dem Lichtempfänger 26 in ein elektrisches Empfangssignal umgewandelt, welches von einer Auswertungseinheit 28 ausgewertet wird. Befindet sich ein Objekt 30 in dem von dem Sendelichtstrahl 14 aufgespannten Überwachungsbereich 22, welches den Sendelichtstrahl 14 zumindest teilweise unterbricht, so fällt weniger oder kein Licht auf den Lichtempfänger 26. Die Auswertungseinheit 28 erkennt auf diese Weise die Anwesenheit oder Abwesenheit eines Objekts 30 in dem Überwachungsbereich 22. Ein entsprechendes binäres Objektfeststellungssignal wird als Schaltsignal auf einen Ausgang 32 gelegt. Um ein rasches Hin- und Herschalten bei einem Empfangssignalpegel in der Nähe der Schaltschwelle zu vermeiden, erfolgt die Bewertung vorzugsweise mit einer Hysterese.

Das erfindungsgemäße zu erfassende Objekt 30 ist kein beliebiges Objekt, sondern es ist zum einen transparent und weist zum anderen ein Zusatzmerkmal 34 auf. Die Auswertung eines Empfangssignals zur Erfassung transparenter Objekte ist beispielsweise durch eine oder mehrere geeignete Schwellen möglich, wie einleitend diskutiert. Die Erfindung ist jedoch nicht auf eine spezielle Form der Erfassung transparenter Objekte beschränkt, denn das ist soweit für sich bekannt. Vielmehr beschäftigt sich die im Folgenden zu erläuternde erfindungsgemäße Auswertung mit der weiteren Anforderung, eine Zusatzmerkmalsinformation über das Zusatzmerkmal 34 zu gewinnen.

Figur 2 ist eine Darstellung einer Flasche mit einem halbtransparenten Etikett als Beispiel eines zu erfassenden transparenten Objekts 30 mit Zusatzmerkmal 34. In einer praktischen Anwendung kann eine derartige Flasche samt halbtransparentem Etikett von einem Betreiber der Anlage vorgegeben werden, in welcher der Sensor 10 eingesetzt ist. Derartige Flaschen und Etiketten sollen dann im Betrieb detektiert und überwacht werden. Einige typische Beispiele für eine gewünschte Erfassung über die Anwesenheitsfeststellung der Flasche hinaus sind: Ist an jeder Flasche ein Etikett angebracht? Ist an jeder Flasche das richtige Etikett angebracht? Welches von mehreren bekannten Etiketten ist angebracht? Ist für den nächsten Prozessschritt sichergestellt, dass kein Etikett mehr vorhanden ist?

Die in Figur 2 dargestellte Flasche mit halbtransparentem Etikett ist nur ein Beispiel, und die Erfindung lässt hier viele Variationen zu. Zunächst kann das Etikett auch undurchsichtig sein, nur einen Teil der Breite der Flasche überdecken sowie verschiedenste teiltransparente oder deckende Schwarzweiß- oder Farbmotive aufweisen. Sofern der Sendelichtstrahl 14 während der gesamten Detektion nur undurchsichtige Objektbereiche trifft, ist eine erfindungsgemäße Auswertung für ein transparentes Objekt 30 mit Zusatzmerkmal 34 eigentlich nicht erforderlich, sie wird aber in aller Regel beispielsweise mit geeignet eingestellten Schwellen solche Objekte erst recht richtig erfassen.

Statt eines Etiketts wäre ein anderes Zusatzmerkmal 34 vorstellbar, wie ein direkter Aufdruck, eine Prägung oder eine Kontur der Flasche. Auch ein Inhalt der Flasche kann ein zu detektierendes Zusatzmerkmal 34 sein, etwa ob die Flasche überhaupt gefüllt ist, oder ob der gewünschte Füllpegel erreicht ist. Ebenso wie das Zusatzmerkmal 34 kann auch das transparente Objekt 30 selbst variieren. Dafür kommen Förderelemente, Verpackungen und sonstige Objekte aus durchsichtigem Kunststoff oder Glas in Betracht, wobei als eines von zahlreichen Beispielen Trays oder Petrischalen erwähnt sein sollen, auf denen wiederum ein Aufkleber oder ein sonstiges Zusatzmerkmal 34 angebracht ist.

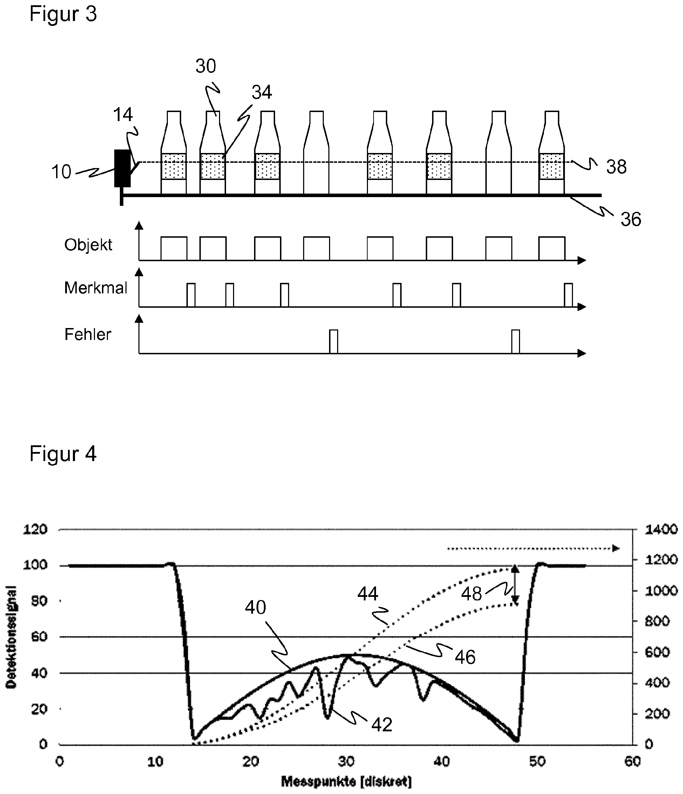

Figur 3 zeigt eine beispielhafte Detektionsanwendung eines optoelektronischen Sensors 10 mit dabei erzeugten Objektfeststellungssignalen sowie Signalen für eine Zusatzmerkmalsinformation. Der Sensor 10 ist hier an einem Förderband 36 montiert, auf dem zu erfassende transparente Objekte 30 gefördert werden. In der Darstellung ist der Sensor 10 in die Papierebene hinein ausgerichtet, während sich die transparenten Objekte 30 von rechts nach links bewegen. Dabei tastet der von dem Sendelichtstrahl 14 erzeugte Lichtfleck die transparenten Objekte 30 praktisch längs einer Linie 38 ab, und es wird je nach Lichtfleckposition auf einem transparenten Objekt 30, dem Zusatzmerkmal 34 oder einem Zwischenraum ein zeitabhängiges Empfangssignal erzeugt.

Unterhalb der Darstellung der Detektionssituation an dem Förderband 36 sind drei zeitabhängige Signale gezeigt, welche durch Auswertung des Empfangssignals entstehen. Das oberste dieser Signale "Objekt" ist das Ergebnis einer Anwesenheitsfeststellung der transparenten Objekte 30. Das entsprechende Objektfeststellungssignal oder Anwesenheitssignal wechselt zwischen einem "Hi"-Pegel, wenn ein transparentes Objekt 30 erfasst ist, und einem "Low"-Pegel in den Zwischenräumen. Dies ist das übliche Signal auch einer herkömmlichen Reflexionslichtschranke.

Unterhalb des Objektfeststellungssignals ist ein Signal "Merkmal" dargestellt, welches jeweils zeitversetzt nach einem Objektfeststellungssignal kurzzeitig in einen "Hi"-Pegel wechselt, um zu bestätigen, dass das Zusatzmerkmal 34 erkannt wurde. Folglich bleibt das Signal "Merkmal" auf dem "Low"-Pegel, wann immer eines der transparenten Objekte 30 kein Zusatzmerkmal 34 trägt.

Das unterste der drei Signale ist ein zu dem Signal "Merkmal" komplementäres Signal "Fehler". Dieses Signal "Fehler" wechselt kurzzeitig in einen "Hi"-Pegel, wenn kein Zusatzmerkmal 34 erkannt wurde, oder alternativ wenn das Zusatzmerkmal 34 nicht das zu erkennende Zusatzmerkmal 34 ist. Das Signal "Fehler" bleibt auf dem "Low"-Pegel, wenn ein transparentes Objekt 30 ein Zusatzmerkmal 34 beziehungsweise das richtige Zusatzmerkmal 34 trägt.

Im Beispiel der Figur 3 sind die Informationen der Signale "Merkmal" und "Fehler" komplementär und damit redundant, so dass wahlweise auch auf eines der Signale verzichtet und die Zusatzmerkmalsinformation aus dem anderen Signal rekonstruiert werden kann.

Der Sensor 10 hat verschiedene Möglichkeiten, die Zusatzmerkmalsinformation entsprechend den Signalen "Merkmal" und "Fehler" auszugeben. Gemäß Figur 3 wird die Zusatzmerkmalsinformation jeweils auf zwei eigenen Ausgängen oder Pins ausgegeben und dadurch unterschieden. Alternativ ist vorstellbar, dies über verschiedene definierte Pulslängen A und B zu codieren, je nachdem, ob das Zusatzmerkmal 34 erfasst wurde oder nicht. Auch komplexere Puls- oder auch andere Codierungen sind möglich. In solchen Ausführungsformen ist zumindest ein zusätzlicher, in Figur 1 nicht dargestellter Ausgang für die Zusatzmerkmalsinformation vorgesehen, eventuell sogar zwei zusätzliche Ausgänge für ein Signal "Merkmal" und ein Signal "Fehler". Werden sogar mehrere Zusatzmerkmale unterschieden, so würde dies noch mehr Ausgänge erfordern, so dass dann eine Codierung an einem gemeinsamen Ausgang bevorzugt ist.

In einer weiteren Ausführungsform wird die Zusatzmerkmalsinformation auf dem Ausgang 32 für das Objektfeststellungssignal mit ausgegeben. Dadurch müssen keine zusätzlichen Ausgänge bereitgestellt werden. Eine gemeinsame Ausgabe ist prinzipiell durch einen Zeitversatz oder ein Zeitmultiplexverfahren denkbar. Um das Schaltverhalten für eine Objektfeststellung nicht zu stören, werden alternativ dem Objektfeststellungssignal Pulse mit der Zusatzmerkmalsinformation überlagert. Dabei muss dafür Sorge getragen werden, dass die Pulse für die Zusatzmerkmalsinformation nicht versehentlich als Wechsel des Objektfeststellungsmerkmals interpretiert werden, was aber durch entsprechende Trägheit möglich ist. In einer bevorzugten Ausführungsform ist der Ausgang 32 sogar für ein Kommunikationsprotokoll wie IO-Link ausgelegt, über das dann Objektfeststellungfeststellungssignal und Zusatzmerkmalsinformation ausgegeben werden.

Figur 4 zeigt eine schematische vergleichende Darstellung eines beispielhaften ersten Empfangssignals 40 für ein transparentes Objekt 30 ohne Zusatzmerkmal 34 und eines beispielhaften zweiten Empfangssignals 42 für ein transparentes Objekt 30 mit Zusatzmerkmal 34.

Das erste Empfangssignal 40 hat anfänglich einen hohen Pegel, der steil abfällt, wenn das transparente Objekt 30 in den Strahlengang eintritt. Dabei ist aber die Ziffer "0" an der Y-Achse nur als geringer Pegel zu verstehen, bei einem transparenten Objekt 30 wird der Pegel nur reduziert und nicht verschwinden. Wenn das transparente Objekt 30 wieder aus dem Strahlengang herausfährt, steigt der Pegel des ersten Empfangssignals 40 wieder auf den ursprünglichen Wert. Dazwischen gibt es einen Anstieg und Abfall, der damit zusammenhängt, dass hier das transparente Objekt 30 eine Flasche ist, die Eigenschaften einer Zylinderlinse.

Das zweite Empfangssignal 42 verläuft grob ähnlich, aber mit dem Unterschied, dass während der Erfassung des transparenten Objekts 30 je nach Transmissions- und Remissionseigenschaften des als Zusatzmerkmal 34 angebrachten Etiketts Schwankungen auftreten.

Es gibt nun unterschiedliche Ausführungsformen einer Auswertung, mit der das Zusatzmerkmal 34 aus dem Empfangssignal erkannt werden kann. Man kann die Figur 4 als Darstellung von Referenzsignalen oder Messsignalen auffassen, und wahlweise auch als Vergleich eines Referenzsignals mit einem Messsignal. Es können nämlich als Referenzsignal das erste Empfangssignal 40, das zweite Empfangssignal 42 oder beide Empfangssignale 40, 42 fungieren.

In einer ersten Betrachtungsweise der Figur 4 ist das erste Empfangssignal 40 ein Referenzsignal und das zweite Empfangssignal 42 ein zu bewertendes Mess- oder Detektionssignal. Die Auswertungseinheit 28 verfügt demnach über Referenzinformationen zu einem transparenten Objekt 30 ohne Zusatzmerkmal 34. Dabei muss es sich aber keineswegs um das gesamte erste Empfangssignal 40 handeln, sondern es kann auch eine daraus abgeleitete Referenzinformation sein. Es ist mit bloßem Auge einsichtig, dass eine Unterscheidung zwischen dem Referenzsignal und dem Detektionssignal möglich ist. Ergänzend müsste man sich noch ein weiteres, nicht dargestelltes Mess- oder Detektionssignal vorstellen, welches einem transparenten Objekt 30 ohne Zusatzmerkmal 34 entspricht und dem ersten Empfangssignal 40 abgesehen von Effekten der konkreten, individuellen Messsituation ähnelt. Wenn das Detektionssignal nach noch zu diskutierenden Kriterien dem Referenzsignal, hier dem ersten Empfangssignal 40, ausreichend entspricht, wird es als ein transparentes Objekt 30 ohne Zusatzmerkmal 34, ansonsten als ein transparentes Objekt 30 mit Zusatzmerkmal 34 eingeordnet.

Umgekehrt kann man in einer zweiten Betrachtungsweise der Figur 4 das zweite Empfangssignal 42 als ein Referenzsignal und das erste Empfangssignal 40 als ein zu bewertendes Detektionssignal auffassen. Hier wäre dann zur Vervollständigung des Bildes gedanklich ein weiteres Detektionssignal zu ergänzen, welches einem transparenten Objekt 30 mit Zusatzmerkmal 34 entspricht und bis auf Auswirkungen der individuellen Messsituation dem zweiten Empfangssignal entspricht. Wenn hier das Detektionssignal dem Referenzsignal entspricht, nun dem zweiten Empfangssignal 42, wird es als ein transparentes Objekt 30 mit Zusatzmerkmal 34, ansonsten als ein transparentes Objekt 30 ohne Zusatzmerkmal 34 erkannt.

In einer dritten Betrachtungsweise sind beide dargestellten Empfangssignale 40, 42 Referenzsignale. Ein nicht dargestelltes Detektionssignal wird damit verglichen, und je nachdem, mit welchem der Empfangssignale 40, 42 es eher übereinstimmt, wird die Zusatzmerkmalsinformation für das erfasste transparente Objekt 30 ausgegeben.

Die Auswertungseinheit 28 kann eine ausreichende Übereinstimmung zwischen einem zu bewertenden Detektionssignal und dem oder den Referenzsignalen entsprechend dem ersten Empfangssignal 40 und/oder dem zweiten Empfangssignal 42 auf verschiedene Weise feststellen. Man erkennt in Figur 4 leicht mit dem Auge, dass sich das erste und zweite Empfangssignal 40, 42 klar trennbar unterscheiden. Derartige Unterschiede für ein transparentes Objekt 30 ohne Zusatzmerkmal 34 und ein transparentes Objekt 30 mit Zusatzmerkmal 34 sind auch einer Auswertung zugänglich, beispielsweise durch Mustervergleich oder eine Korrelation. Ein solches Vorgehen erfordert einen gewissen Aufwand, besonders wenn die Unterschiede etwa aufgrund eines transparenten Etiketts nur gering sind, und meist auch ein Zwischenspeichern der jeweiligen Verläufe von Referenzsignal und Detektionssignal.

Deshalb erfolgt der Vergleich in einer bevorzugten Ausführungsform durch Integration, wodurch die Auswertung deutlich schlanker und einfacher wird, dabei aber robust bleibt. Figur 4 illustriert ein erstes integriertes Empfangssignal 44 und ein zweites integriertes Empfangssignal 46 durch gepunktete Linien, das jeweils durch Integration aus dem ersten Empfangssignal 40 beziehungsweise dem zweiten Empfangssignal 42 entsteht. Die integrierten Signale 44, 46 können schrittweise durch diskrete Integration an diskreten, vorzugsweise äquidistanten Abtastpunkten der Empfangssignale 40, 42 erzeugt werden, ohne dass das jeweilige zeitabhängige Signal zwischengespeichert werden muss. Start- und Endpunkt der Integration sind wie dargestellt vorzugsweise jeweils der Moment, in dem das transparente Objekt 30 in den Strahlengang des Sensors 10 eintritt beziehungsweise aus dem Strahlengang heraustritt. Als Triggersignal kann das Objektfeststellungssignal dienen, beziehungsweise das entsprechende Auswertungsergebnis zu dessen Erzeugung in der Auswertungseinheit 28. Ein externer Trigger durch einen weiteren Sensor oder ein Signal einer übergeordneten Steuerung etwa der Anlage, zu der das Förderband 36 gehört, ist aber ebenfalls denkbar.

Der abschließende Wert des ersten integrierten Empfangssignals 44 unterscheidet sich deutlich von demjenigen des zweiten integrierten Empfangssignals 46, wie in Figur 4 durch einen Pfeil 48 gezeigt. Die Bewertung zur Bestimmung der Zusatzmerkmalsinformation kann also besonders einfach und dennoch zuverlässig anhand dieser summarischen Abweichung vorgenommen werden. Dazu genügt im Prinzip eine einfache Schwelle beispielsweise in der Mitte der Pfeiles 48.

Die Referenzinformation für die Bewertung der integrierten Werte kann vorzugsweise durch Einlernen gewonnen werden, indem ein als Referenz fungierendes transparentes Objekt 30 mit beziehungsweise ohne Zusatzmerkmal 34 durch den Strahlengang des Sensors 10 geführt wird. Figur 4 illustriert auch dies, die Y-Werte an den Pfeilspitzen des Pfeiles 48 können als Referenzwerte für ein transparentes Objekt 30 mit Zusatzmerkmal 34 beziehungsweise ohne Zusatzmerkmal 34 verstanden werden. So entstehen ein erster und zweiter integrierter Referenzwert, wobei diese natürlich auch anders vorgegeben oder parametriert werden können als durch einen Einlernvorgang. Man kann in einer Ausführungsform eine Schwelle in deren Mittelwert legen.

Es wurde schon ausgeführt, dass ein transparentes Objekt 30 mit und/oder ohne Zusatzmerkmal 34 als Referenz dienen kann. Dementsprechend kann auch speziell bei einer Bewertung durch Integration der erste und/oder zweite integrierte Referenzwert herangezogen werden. Beispielsweise zeigt ein Abweichen von dem ersten integrierten Referenzwert an, dass das transparente Objekt 30 jedenfalls irgendeine zusätzliche strahlverändernde Struktur aufweist. Entsprechend bedeutet eine Abweichung von dem zweiten integrierten Referenzwert, dass nicht das erwartete Zusatzmerkmal 34 erfasst ist. Wenn die Anwendung sicherstellt, dass es nur zwei Arten von transparenten Objekten 30 gibt, sind somit Vergleiche mit dem ersten und dem zweiten integrierten Referenzwert für sich schon ausreichend. Alternativ wird für eine noch zuverlässigere Erkennung sowohl der mit dem ersten wie dem zweiten integrierten Referenzwert verglichen und beispielsweise gefordert, das der integrierte Wert des Empfangssignals in einem bestimmten Korridor um den jeweiligen integrierten Referenzwert liegt.

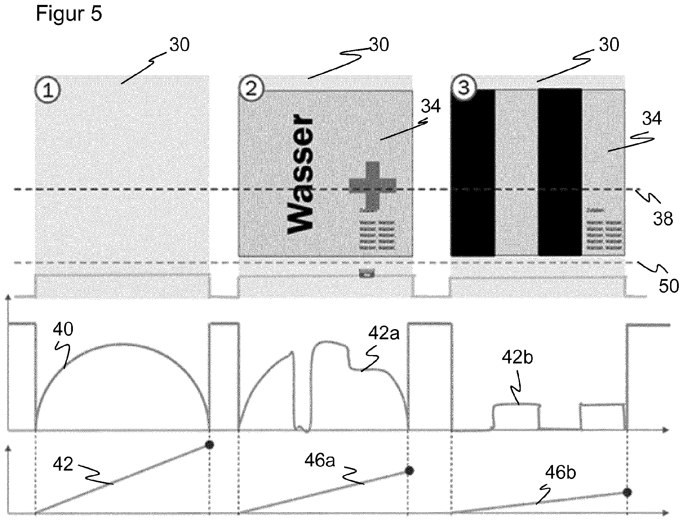

Figur 5 zeigt drei weitere Beispiele in Form von Ansichten eines Ausschnitts eines transparenten Objekts 30 und darunter zugehörigen Empfangssignalen 40, 42a-b beziehungsweise integrierten Empfangssignalen 44, 46a-b. Links mit der Ziffer Eins ist nochmals zum Vergleich die Situation für ein transparentes Objekt 30 ohne Zusatzmerkmal 34 mit dem ersten Empfangssignal 40 und dem ersten integrierten Empfangssignal 42 dargestellt. Daneben sind mit den Ziffern Zwei und Drei transparente Objekte 30 mit zwei unterschiedlichen Etiketten als Zusatzmerkmal 34 sowie die zugehörigen zweiten Empfangssignale 42a-b und zweiten integrierten Empfangssignale 46a-b gezeigt. Die integrierten Empfangssignale 44, 46a-b sind nur sehr schematisch, tatsächlich sind sie nicht linear, sondern weisen unterschiedliche Steigungen oder Stufen je nach dem zugehörigen infinitesimalen oder diskreten Flächenstück des jeweiligen Empfangssignals 40, 42a-b auf. Die untere gestrichelte Linie 50 bezeichnet den Weg eines optionalen Referenzlichtflecks unterhalb der Etiketten. Direkt darunter ist noch einmal der Verlauf des Objektfeststellungssignals eingezeichnet.

Man erkennt aus den zweiten Empfangssignalen 42a-b, aber auch den integrierten zweiten Empfangssignalen 46a-b, dass sich verschiedene Zusatzmerkmale 34 deutlich von einem transparenten Objekt 30, aber sogar auch untereinander unterscheiden lassen. So ist nicht nur der Verlauf des zweiten Empfangssignale 42a in der Mitte klar unterscheidbar anders als derjenige des zweiten Empfangssignals 42b rechts, sondern auch die jeweiligen integrierten Referenzwerte sind auf jeweils einem eigenen Niveau. Das bedeutet zweierlei: die Zusatzmerkmalsinformation kann sowohl anhand des gesamten Detektionssignals oder Abschnitten davon als auch anhand eines oder mehrere, für Teilabschnitte gewonnener integrierten Referenzwertes für das Detektionssignal robust gewonnen werden, ohne dass es dabei sonderlich auf die Ausprägung des konkreten zu erkennenden Zusatzmerkmals 34 ankommt. Darüber hinaus ist aber sogar auch möglich, in einer vorteilhaften Weiterbildung mehrere Zusatzmerkmale 34 voneinander zu unterscheiden, und zwar auch summarisch anhand von integrierten Referenzwerten. Zwar ist nicht ausgeschlossen, dass unterschiedliche Etiketten oder allgemein Zusatzmerkmale 34 in zueinander zu ähnlichen integrierten Referenzwerten resultieren. Das ist aber nur vergleichsweise selten der Fall und zudem während des Einlernens erkennbar, dass der Sensor 10 sich für eine bestimmte Kombination von Etiketten oder Zusatzmerkmalen 34 nicht eignet.

Die Detektionssignale werden gegenüber der Referenz gestreckt oder gestaucht, wenn das Förderband 36 in einer abweichenden Geschwindigkeit läuft oder gar stoppt. Dementsprechend werden dann auch die integrierten Werte verfälscht. Damit werden auch die Vergleiche unzuverlässig. Der Auswertungseinheit 28 kann aber durch Einlernen oder Parametrieren bekannt sein, wie lang das erwartete Zeitfenster ist, in dem ein transparentes Objekt 30 sich jeweils im Strahlengang befindet und demzufolge erfasst wird. Dieser Wert kann beispielsweise in Form einer Anzahl von Abtastpunkten abgelegt sein. Tritt nun während einer Detektion eine Abweichung von dieser gespeicherten Erwartung auf, so kann die Auswertungseinheit 28 daran erkennen, dass die Fördergeschwindigkeit verändert ist. Die Zusatzmerkmalsinformation ist dann nicht zuverlässig, und darauf kann der Sensor 10 hinweisen, sei es durch eine Warnung über eine Anzeige oder ein Signal an eine übergeordnete Steuerung. Es ist auch denkbar, dass der Sensor 10 seine Abtastrate anpasst, damit die Detektionssignale zumindest für nachfolgende Objekte wieder in der erwarteten Form ohne Streckung oder Stauchung vorliegen.

## Patentansprüche

1. Optoelektronischer Sensor (10), insbesondere Lichtschranke oder Lichttaster, zur Erfassung von transparenten Objekten (30) in einem Überwachungsbereich (22), wobei sich Sensor (10) und zu detektierende Objekte (30) in Relativbewegung befinden und wobei der Sensor (10) einen Lichtsender (12) zum Aussenden eines Lichtsignals (14), einen Lichtempfänger (26) zum Erzeugen eines Empfangssignals aus dem empfangenen Lichtsignal, eine Auswertungseinheit (28), die dafür ausgebildet ist, das Empfangssignal zu bewerten und ein entsprechendes Objektfeststellungssignal zu erzeugen, welches anzeigt, ob ein transparentes Objekt (30) in dem Überwachungsbereich (22) erfasst ist, sowie einen Ausgang (32) zur Ausgabe des Objektfeststellungssignals aufweist,
**dadurch gekennzeichnet,**
**dass** die Auswertungseinheit (28) weiterhin dafür ausgebildet ist, aus dem während der Relativbewegung über ein Objekt wandernden Lichtfleck, den das ausgesandte Lichtsignal (14) auf dem Objekt erzeugt, ein zeitabhängiges Empfangssignal zu gewinnen, anhand des zeitabhängigen Empfangssignals und einer Referenzinformation durch Mustervergleich, Korrelation oder durch Zusammenfassen der zeitabhängigen Information mittels Integration des Empfangssignals zu erkennen, ob ein erfasstes transparentes Objekt (30) ein Zusatzmerkmal (34) aufweist, und eine entsprechende Zusatzmerkmalsinformation auszugeben.

2. Sensor (10) nach Anspruch 1,
wobei die Auswertungseinheit (28) dafür ausgebildet ist, das Empfangssignal für die Erkennung des Zusatzmerkmals (34) auf einem transparenten Objekt (30) nur in einem Zeitintervall zu bewerten, in dem das transparente Objekt (30) erfasst ist.

3. Sensor (10) nach Anspruch 2,
wobei das Zeitintervall durch das Objektfeststellungssignal vorgegeben ist.

4. Sensor (10) nach Anspruch 2 oder 3,
wobei die Auswertungseinheit (28) dafür ausgebildet ist, eine Änderung der Relativbewegung anhand einer Abweichung des Zeitintervalls von einer Erwartung zu erkennen.

5. Sensor (10) nach einem der vorhergehenden Ansprüche,
wobei die Auswertungseinheit (28) dafür ausgebildet ist, als Referenzinformation eine aus einem Empfangssignal eines Referenzobjekts gewonnene Information zu verwenden, wobei das Referenzobjekt ein zu detektierendes transparentes Objekt (30) mit und/oder ohne Zusatzmerkmal (34) ist.

6. Sensor (10) nach einem der vorhergehenden Ansprüche,
wobei die Auswertungseinheit (28) dafür ausgebildet ist, als Referenzinformation eine aus einem integrierten Empfangssignal eines Referenzobjekts gewonnene Information zu verwenden, wobei das Referenzobjekt ein zu detektierendes transparentes Objekt (30) mit und/oder ohne Zusatzmerkmal (34) ist.

7. Sensor (10) nach Anspruch 6,
wobei die Auswertungseinheit (28) dafür ausgebildet ist, als Referenzinformation einen Schwellenwert aus dem integrierten Empfangssignals des Referenzobjekts zu verwenden.

8. Sensor (10) nach einem der vorhergehenden Ansprüche,
wobei die Auswertungseinheit (28) dafür ausgebildet ist, das Objektfeststellungssignal und die Zusatzmerkmalsinformation an dem Ausgang (32) auszugeben.

9. Sensor (10) nach einem der Ansprüche 1 bis 7,
der einen weiteren Ausgang zur Ausgabe der Zusatzmerkmalsinformation aufweist.

10. Verfahren zur Erfassung von transparenten Objekten (30) in einem Überwachungsbereich (22) mit einem optoelektronischen Sensor (10), der sich in Relativbewegung zu den zu detektierenden Objekten (30) befindet, wobei ein Lichtsignal (14) ausgesendet, das empfangene Lichtsignal in ein Empfangssignal gewandelt und das Empfangssignal bewertet wird, um ein Objektfeststellungssignal zu erzeugen und auszugeben, das anzeigt, ob ein transparentes Objekt (30) in dem Überwachungsbereich (22) erfasst ist,
**dadurch gekennzeichnet,**
**dass** anhand des zeitabhängigen Empfangssignals, das aus dem während der Relativbewegung über ein Objekt wandernden Lichtfleck gewonnen wird, den das ausgesandte Lichtsignal (14) auf dem Objekt erzeugt, und einer Referenzinformation durch Mustervergleich, Korrelation oder durch Zusammenfassen der zeitabhängigen Information mittels Integration des Empfangssignals erkannt wird, ob ein erfasstes transparentes Objekt (30) ein Zusatzmerkmal (34) aufweist, und dass eine entsprechende Zusatzmerkmalsinformation ausgegeben wird.

## Claims

1. An optoelectronic sensor (10), in particular a light barrier or a scanning light sensor, for detecting transparent objects (30) in a monitoring area (22), wherein the sensor (10) and the objects (30) to be detected are in relative movement and wherein the sensor (10) comprises a light transmitter (12) for transmitting a light signal (14), a light receiver (26) for generating a received signal from the received light signal, an evaluation unit (28) configured to evaluate the received signal and to generate a corresponding object detection signal indicating whether a transparent object (30) is detected in the monitoring area (22), and an output (32) for outputting the object detection signal,
**characterized in that** the evaluation unit (28) is further configured to obtain a time-dependent received signal from the light spot generated on an object by the transmitted light signal (14) and traveling over the object during the relative movement, to detect, based on the time-dependent received signal and reference information, by pattern matching, correlation, or by combining the time-dependent information by means of integration of the received signal, whether a detected transparent object (30) has an additional feature (34), and to output corresponding additional feature information.

2. The sensor (10) according to claim 1,
wherein the evaluation unit (28) is configured to evaluate the received signal for the detection of the additional feature (34) on a transparent object (30) only in a time interval in which the transparent object (30) is detected.

3. The sensor (10) according to claim 2,
wherein the time interval is predetermined by the object detection signal.

4. The sensor (10) according to claim 2 or 3,
wherein the evaluation unit (28) is configured to detect a change in the relative movement on the basis of a deviation of the time interval from an expectation.

5. The sensor (10) according to one of the preceding claims,
wherein the evaluation unit (28) is configured to use as reference information an information obtained from a received signal of a reference object, wherein the reference object is a transparent object (30) to be detected with and/or without an additional feature (34).

6. The sensor (10) according to one of the preceding claims,
wherein the evaluation unit (28) is configured to use as reference information an information obtained from an integrated received signal of a reference object, wherein the reference object is a transparent object (30) to be detected with and/or without an additional feature (34).

7. The sensor (10) according to claim 6,
wherein the evaluation unit (28) is configured to use as reference information a threshold value from the integrated received signal of the reference object.

8. The sensor (10) according to one of the preceding claims,
wherein the evaluation unit (28) is configured to output the object detection signal and the additional feature information at the output (32).

9. The sensor (10) according to one of claims 1 to 7,
which has a further output for the output of the additional characteristic information.

10. A method for detecting transparent objects (30) in a monitoring area(22) with an optoelectronic sensor (10) which is in relative movement to the objects (30) to be detected, wherein a light signal (14) is transmitted, the received light signal is converted into a received signal and the received signal is evaluated in order to generate and output an object detection signal which indicates whether a transparent object (30) is detected in the monitoring area (22),
**characterized in that** it is detected, based on reference information and the time-dependent received signal obtained from the light spot which is generated on an object by the transmitted light signal (14) and which travels over the object during the relative movement, by pattern matching, correlation or by combining the time-dependent information by means of integration of the received signal, whether a detected transparent object (30) has an additional feature (34), and **in that** corresponding additional feature information is output.

## Revendications

1. Capteur optoélectronique (10), en particulier barrière lumineuse ou détecteur photoélectrique, pour détecter des objets transparents (30) dans une zone à surveiller (22), le capteur (10) et les objets à détecter (30) étant en mouvement relatif et le capteur (10) comprenant un émetteur de lumière (12) pour émettre un signal lumineux (14), un récepteur de lumière (26) pour générer un signal de réception à partir du signal lumineux reçu, une unité d'évaluation (28) qui est réalisée pour évaluer le signal de réception et pour générer un signal de constatation d'objet correspondant qui indique si un objet transparent (30) est détecté dans la zone à surveiller (12), ainsi qu'une sortie (32) pour délivrer le signal de constatation d'objet, **caractérisé en ce que**
l'unité d'évaluation (28) est en outre réalisée
pour obtenir un signal de réception dépendant du temps, à partir de la tache lumineuse qui se déplace sur un objet pendant le mouvement relatif et qui est générée sur l'objet par le signal lumineux émis (14),
pour reconnaître si un objet transparent détecté (30) présente une caractéristique supplémentaire (34), en se basant sur le signal de réception dépendant du temps et sur une information de référence, par comparaison de motifs, par corrélation ou par regroupement de l'information dépendante du temps au moyen de l'intégration du signal de réception, et
pour délivrer une information correspondante de caractéristique supplémentaire.

2. Capteur (10) selon la revendication 1,
dans lequel
l'unité d'évaluation (28) est réalisée pour évaluer le signal de réception pour la reconnaissance de la caractéristique supplémentaire (34) sur un objet transparent (30) seulement dans un intervalle de temps dans lequel l'objet transparent (30) est détecté.

3. Capteur (10) selon la revendication 2,
dans lequel
l'intervalle de temps est défini par le signal de constatation d'objet.

4. Capteur (10) selon la revendication 2 ou 3,
dans lequel
l'unité d'évaluation (28) est réalisée pour détecter un changement du mouvement relatif en se basant sur un écart de l'intervalle de temps par rapport à une attente.

5. Capteur (10) selon l'une des revendications précédentes,
dans lequel
l'unité d'évaluation (28) est réalisée pour utiliser comme information de référence une information obtenue à partir d'un signal de réception d'un objet de référence, l'objet de référence étant un objet transparent à détecter (30) avec et/ou sans caractéristique supplémentaire (34).

6. Capteur (10) selon l'une des revendications précédentes,
dans lequel
l'unité d'évaluation (28) est réalisée pour utiliser comme information de référence une information obtenue à partir d'un signal de réception intégré d'un objet de référence, l'objet de référence étant un objet transparent à détecter (30) avec et/ou sans caractéristique supplémentaire (34).

7. Capteur (10) selon la revendication 6,
dans lequel
l'unité d'évaluation (28) est réalisée pour utiliser comme information de référence une valeur seuil à partir du signal de réception intégré de l'objet de référence.

8. Capteur (10) selon l'une des revendications précédentes,
dans lequel
l'unité d'évaluation (28) est réalisée pour délivrer le signal de constatation d'objet et l'information de caractéristique supplémentaire à la sortie (32).

9. Capteur (10) selon l'une des revendications 1 à 7,
comprenant une autre sortie pour émettre l'information de caractéristique supplémentaire.

10. Procédé pour détecter des objets transparents (30) dans une zone à surveiller (22) au moyen d'un capteur optoélectronique (10) qui est en mouvement relatif par rapport aux objets à détecter (30),
dans lequel
un signal lumineux (14) est émis,
le signal lumineux reçu est converti en un signal de réception et le signal de réception est évalué pour générer et délivrer un signal de constatation d'objet qui indique si un objet transparent (30) est détecté dans la zone à surveiller (22),
**caractérisé en ce que**
sur la base du signal de réception dépendant du temps obtenu à partir de la tache lumineuse qui se déplace sur un objet pendant le mouvement relatif et qui est générée sur l'objet par le signal lumineux émis (14), et sur la base d'une information de référence, il est reconnu si un objet transparent détecté (30) présente une caractéristique supplémentaire (34), par comparaison de motifs, par corrélation ou par regroupement de l'information dépendante du temps au moyen de l'intégration du signal de réception, et
**en ce qu'**une information correspondante de caractéristique supplémentaire est délivrée.
